# EUROPÄISCHE PATENTSCHRIFT

(11) **EP 1 582 759 B1**
(45) Veröffentlichungstag und Bekanntmachung des Hinweises auf die Patenterteilung: **14.03.2007**
(21) Anmeldenummer: 05004223.3
(22) Anmeldetag: 25.02.2005
(51) Int. Cl.: F16D 25/10, F16D 21/06

(54) **Hydraulisches Kupplungsbetätigungssystem**
Hydraulic actuating system for clutches.
Système d'actionnement hydraulique pour embrayage.

(30) Priorität: 31.03.2004 DE 102004015656
(43) Veröffentlichungstag der Anmeldung: 05.10.2005
(73) Patentinhaber: LuK Lamellen und Kupplungsbau Beteiligungs KG, 77815 Bühl (DE)
(72) Erfinder: Lindenschmidt, Christoph, 76287 Rheinstetten (DE); Panther, Urban, 77960 Seelbach (DE)

(56) Entgegenhaltungen:
- EP-A- 0 077 837
- DE-A1- 10 064 459
- FR-A- 2 604 228
- GB-A- 1 295 593

## Beschreibung

Die vorliegende Erfindung betrifft ein hydraulisches Ausrücksystem mit einem Doppelkolbenausrücker zum Betätigen einer Doppelkupplung eines automatisierten Getriebes, insbesondere eines Parallelschaltgetriebes eines Fahrzeuges, mit in einem Gehäuse koaxial zueinander angeordneten Kolben, welche zum Betätigen einer Tellerfeder jeder Kupplung der Doppelkupplung relativ zueinander bewegbar jeweils in zugeordneten Zylinderräumen des Gehäuses aufgenommen sind.

Aus der Fahrzeugtechnik sind verschiedene Ausrücksysteme für die Betätigung einer Kupplung eines automatisierten Getriebes bekannt. Beispielsweise werden hydraulische Ausrücksysteme mit einem hydraulisch betätigten Ausrücker zur Betätigung der beiden Kupplungen einer Doppelkupplung verwendet. Diese Ausrücksysteme können beispielsweise Doppelringkolbenausrücker (Doppel-CSC) verwenden. Bei einem Doppelkolbenausrücker werden die Tellerfedern jeder Kupplung durch die Ringkolben betätigt, siehe zum Beispiel DE-A-100 64 459.

Es hat sich gezeigt, dass es bei Doppelkupplungen erforderlich ist, die hydraulische Fläche möglichst groß auszugestalten. Dadurch jedoch erhöht sich auch der Lagerdurchmesser für ein Ausrücklager sowie für das Deckellager eines Gehäuses, in dem die Ringkolben aufgenommen sind.

Das bekannte hydraulische System zum Betätigen der Doppelkupplung bei einem Parallelschaltgetriebe weist somit zwei zueinander koaxial angeordnete Kolben auf, welche in einem Gehäuse aufgenommen sind, und zur Betätigung der Tellerfedern der zugeordneten Kupplungen der Doppelkupplungen verwendet werden.

Der vorliegenden Erfindung liegt die Aufgabe zugrunde, bei Beibehaltung einer vorgegebenen Größe bzw. einer Verkleinerung des Doppelkolbenausrückers eine Vergrößerung der hydraulischen Übertragungsfläche zu erzielen.

Diese Aufgabe wird erfindungsgemäß durch ein hydraulisches Ausrücksystem mit einem Doppelkolbenausrücker zum Betätigen einer Doppelkupplung eines automatisierten Getriebes, insbesondere eines Parallelschaltgetriebes eines Fahrzeuges mit in einem Gehäuse koaxial zueinander angeordneten Kolben gelöst, welche zum Betätigen der Tellerfeder einer Kupplung der Doppelkupplung in zugeordneten Zylinderräumen relativ zueinander bewegbar sind, wobei einander zugewandte Bereiche der Manteloberfläche der Kolben in Kontakt stehen.
Weitere vorteilhafte Ausgestaltungen ergeben sich insbesondere aus den Unteransprüchen.

Demnach wird ein erfindungsgemäßes Ausrücksystem vorgeschlagen, bei dem das Gehäuse des Doppelkolbenausrückers keine zusätzliche Gehäusewand zwischen den beiden in dem Gehäuse aufgenommenen Kolben aufweist. Auf diese Weise wird der erforderliche Durchmesser des Gehäuses minimiert und damit der notwendige Lagerdurchmesser des Deckels des Gehäuses ebenfalls reduziert, ohne dabei die hydraulische Fläche der Kolben zu verringern. Somit wird mit der erfindungsgemäßen Lösung bei gleichem Lagerdurchmesser eine größere hydraulische Fläche als bei bekannten Ausrücksystemen realisiert, bzw. können bei Verwendung eines bisher eingesetzten Gehäusedurchmessers größer dimensionierte Ausrücklager und damit auch entsprechend dimensionierte Ringkolben eingesetzt werden, wodurch höhere Kräfte übertragbar sind.

Im Rahmen einer vorteilhaften Ausgestaltung der vorliegenden Erfindung kann vorgesehen sein, dass die einander zugewandten Bereiche der Umfangsflächen der Kolben über den gesamten Umfang dichtend aneinander gleiten, so dass eine gemeinsame Abtrennung der jeweils zugeordneten Zylinderräume der Kolben vorgesehen ist. Somit wird durch die aneinander gleitenden Kolben quasi eine gemeinsame Zylinderwand gebildet, die in Verbindung mit dem jeweiligen Gehäuseteil die Führung des Kolbens bildet. Die beiden Kolben können über den gesamten Umfangsbereich aneinander gleiten. Es ist jedoch auch denkbar, dass z. B. zum Zentrieren eine Nut-Feder-Verbindung oder dergleichen verwendet werden.

Um eine optimale Bauraumausnutzung zu erreichen, ist vorgesehen, dass die in dem Gehäuse aufgenommenen Kolben (Ringkolben) in axialer Richtung versetzt zueinander angeordnet sind. Auf diese Weise können die beiden Tellerfedern der Kupplungen der Doppelkupplung unabhängig voneinander betätigt werden, ohne dass dabei ein größerer Lagerdurchmesser erforderlich ist. Vorzugsweise kann der innere Kolben in axialer Richtung weiter vorstehen als der äußere Kolben. Es sind jedoch auch andere Anordnungsmöglichkeiten denkbar.

Für eine ausreichende Abdichtung des in den jeweiligen Zylinderräumen enthaltenen Mediums kann z.B. vorgesehen sein, dass zumindest an dem den Gehäuse zugewandten Bereichen der Umfangsflächen jedes Kolbens Mittel zum Abdichten des jeweiligen Zylinderraums vorgesehen sind. Diese Mittel können zum Abdichten geeignete Dichtprofile oder dergleichen, aufweisen und z. B. aus Kunststoff oder auch aus anderen Materialien bestehen.

Um auch das Gehäuse im Bereich der einander zugewandten Bereiche der Umfangsflächen der Kolben über den gesamten Umfang abzudichten, kann auch in diesen Bereichen ein Dichtmittel mit einem geeigneten Dichtprofil oder dergleichen verwendet werden.

Bei dem erfindungsgemäßen Ausrücksystem ist vorgesehen, dass zwischen jeder Tellerfeder und dem zugeordneten Kolben ein Ausrücklager, welches vorzugsweise als Wälzkörperlager mit zwei Lagerschalen ausgebildet ist, vorgesehen ist. Dabei kann das dem Ausrücklager zugewandte Ende jedes Kolbens eine geeignete Aufnahme für eine der Lagerschalen des Ausrücklagers vorgesehen sein. Beispielsweise kann die Aufnahme der Lagerschale dadurch realisiert werden, indem das zugewandte Ende jedes Kolbens eine Ausnehmung oder dergleichen aufweist, in die die Lagerschale eingebracht werden kann, um sie an dieser Stelle zu fixieren.

Im Folgenden wird die Erfindung anhand der Zeichnung näher erläutert. Es zeigen:
- Figur 1: eine geschnittene Teilansicht eines möglichen Ausrücksystems gemäß der vorliegenden Erfindung; und
- Figur 2: eine dreidimensionale Teilansicht eines Doppelringkolbenausrückers.

Das erfindungsgemäße Ausrücksystem zum Betätigen einer Doppelkupplung eines Parallelschaltgetriebes weist bei der beispielhaft gezeigten Ausführungsform einen Doppelringkolbenausrücker 1 auf, der ein Gehäuse 2 umfasst, das rotationssymmetrisch ausgebildet ist.

In dem Gehäuse 2 sind zwei zueinander koaxial angeordnete Ringkolben 3, 4 in zugeordneten Zylinderräumen 13, 14 aufgenommen, wobei ein innerer Ringkolben 3 und ein äußerer Ringkolben 4 vorgesehen sind. Die beiden Ringkolben 3, 4 sind relativ zueinander bewegbar, so dass jeder Ringkolben 3, 4 zum Betätigen der entsprechenden Tellerfeder 5, 6 zugeordnet ist.

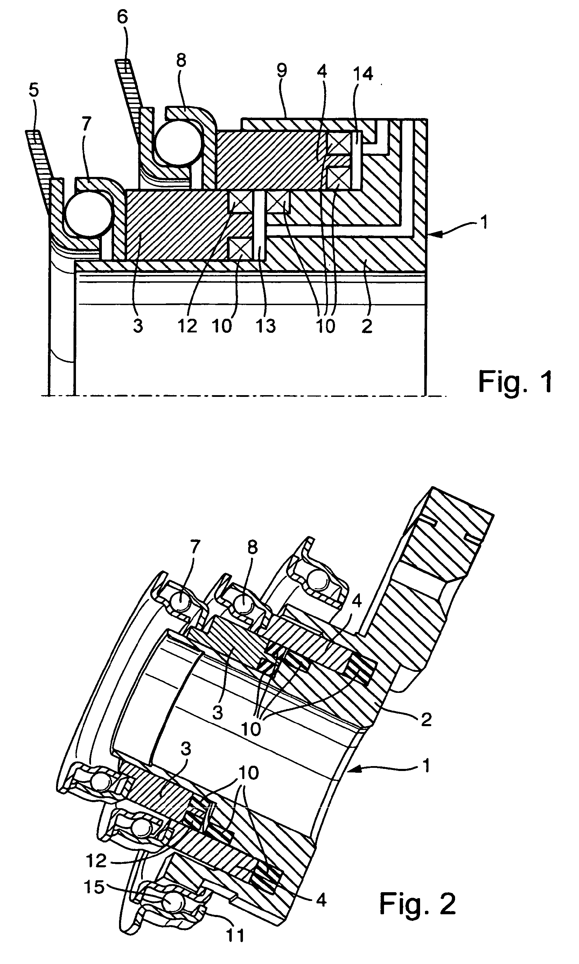

Die Tellerfedern 5, 6 der nicht weiter dargestellten Kupplungen der Doppelkupplung sind in Figur 1 nur teilweise angedeutet. Zwischen dem jeweiligen Ringkolben 3, 4 und der zugeordneten Tellerfeder 5, 6 ist ein Ausrücklager 7, 8 vorgesehen. Jedes Ausrücklager 7 und 8 ist bei dieser Ausführungsform als Wälzlager ausgebildet, wobei die der Tellerfeder 5 zugeordnete Lagerschale des Ausrücklagers 7 vom Ringkolben 3 betätigt wird und die Lagerschale des Ausrücklagers 8 entsprechend vom Ringkolben 4.

Erfindungsgemäß ist vorgesehen, dass die einander zugewandten Bereiche der Umfangsflächen der Ringkolben 3, 4 direkt aneinander geführt sind. Auf diese Weise können die zugewandten Bereiche der Umfangsflächen dichtend aneinander gleiten, so dass eine gemeinsame Abtrennung zwischen den jeweils den Ringkolben 3, 4 zugeordneten Zylinderräumen 13, 14 realisiert wird.

Demnach ist keine zusätzliche Gehäusewand zwischen den Ringkolben 3, 4 zum Abtrennen der beiden Zylinderräume 13, 14 erforderlich. Demzufolge kann die wirksame hydraulische Fläche der jeweiligen Ringkolben 3, 4, bezogen auf den Durchmesser des Gehäuses 2 bzw. des erforderlichen Lagerdurchmessers für den lediglich in Figur 2 teilweise dargestellten Deckel 11, vergrößert werden. Der Sitz des nur in Figur 2 dargestellten Deckellagers 15 ist in Figur 1 mit der Bezugszahl 9 gekennzeichnet.

Zum Abdichten des Gehäuses 2 bzw. der in dem Gehäuse 2 geführten Ringkolben 3, 4 sind mehrere Dichtprofile 10, 12 vorgesehen, welche beispielsweise ringförmig oder als Stopfbuchsen oder dergleichen ausgebildet sein können. Mit der Bezugszahl 10 sind die Dichtprofile bezeichnet, welche eine Abdichtung des jeweiligen Zylinderraumes 13, 14 zwischen dem Gehäuse 2 und den dem Gehäuse 2 zugewandten Bereichen der Umfangsfläche jedes Ringkolbens 3, 4 vorsieht. Das Dichtprofil 12 dient dagegen zur Abdichtung zwischen den einander zugewandten Bereichen der Umfangsflächen der Ringkolben 3, 4 selbst.

Der in Figur 2 schematisch dargestellte Doppelringkolbenausrücker 1 kann vorzugsweise bei Fahrzeugen mit einem Parallelschaltgetriebe und einem hydrostatischen Kupplungsausrücksystem eingesetzt werden.

In Fig. 2 werden gleiche Bauteile mit den gleichen Bezugszeichen wie in Figur 1 bezeichnet.

Das dreidimensional dargestellte Gehäuse 2 des Doppelringkolbenausrückers 1 des erfindungsgemäßen hydraulischen Ausrücksystems weist zusätzlich das an dem Gehäuse 2 vorgesehene Deckellager 15 auf. Insbesondere ist aus dieser Darstellung ersichtlich, wie die beiden Ringkolben 3, 4 direkt ineinander geführt sind und somit den Durchmesser des Deckellagers 15 bei gleich bleibender hydraulischer Wirkfläche der Ringkolben 3, 4 reduzieren.

### Bezugszeichenliste

- 1: Doppelringkolbenausrücker
- 2: Gehäuse
- 3: Innerer Ringkolben
- 4: Äußerer Ringkolben
- 5: Tellerfeder
- 6: Tellerfeder
- 7: Ausrücker
- 8: Ausrücker
- 9: Sitz für Deckellager
- 10: Dichtprofil
- 11: Deckel
- 12: Dichtprofil
- 13: Zylinderraume
- 14: Zylinderraume
- 15: Deckellager

## Patentansprüche

1. Hydraulisches Ausrücksystem mit einem Doppelkolbenausrücker (1) zum Betätigen einer Doppelkupplung eines automatisierten Getriebes eines Fahrzeuges mit in einem zylinderförmigen Gehäuse (2) koaxial zueinander angeordneten Kolben (3, 4) welche zum Betätigen der jeweiligen Tellerfeder (5, 6) einer Kupplung der Doppelkupplung in zugeordneten Zylinderräumen (13;14) relativ zueinander bewegbar sind, **dadurch gekennzeichnet, dass** einander zugewandte Bereiche der Manteloberflächen der Kolben (3,4) in Kontakt stehen.

2. Hydraulisches Ausrücksystem nach Anspruch 1, **dadurch gekennzeichnet, dass** die einander zugewandten Bereiche der Manteloberflächen der Kolben (3,4) über den gesamten Umfang dichtend aneinander gleiten, sodass eine gemeinsame Abtrennung der jeweils zugeordneten Zylinderräume (13, 14) der Kolben (3,4) erfolgt.

3. Hydraulisches Ausrücksystem nach Anspruch 1 oder 2, **dadurch gekennzeichnet, dass** die beiden Kolben (3,4) als Ringkolben ausgebildet sind.

4. Hydraulisches Ausrücksystem nach einem der vorangehenden Ansprüche, **dadurch gekennzeichnet, dass** die in dem Gehäuse (2) aufgenommenen Kolben (3,4) in axialer Richtung versetzt zueinander angeordnet sind.

5. Hydraulisches Ausrücksystem nach einem der vorangehenden Ansprüche, **dadurch gekennzeichnet, dass** zumindest an den dem Gehäuse (2) zugewandten Bereichen der Umfangsflächen jedes Kolbens (3,4) Mittel zum Abdichten des jeweiligen Zylinderraumes (13, 14) vorgesehen sind.

6. Hydraulisches Ausrücksystem nach Anspruch 5, **dadurch gekennzeichnet, dass** als Mittel zum Abdichten zumindest ein Dichtprofil (10, 12) vorgesehen ist.

7. Hydraulisches Ausrücksystem nach einem der vorangehenden Ansprüche, **dadurch gekennzeichnet, dass** die einander zugewandten Flächen der Kolben (3,4) über den gesamten Umfang abgedichtet sind.

8. Hydraulisches Ausrücksystem nach einem der vorangehenden Ansprüche, **dadurch gekennzeichnet, dass** zwischen jeder Tellerfeder (5, 6) und dem zugeordneten Kolben (3,4) ein Ausrücklager (7, 8) vorgesehen ist.

9. Hydraulisches Ausrücksystem nach Anspruch 8, **dadurch gekennzeichnet, dass** das dem Ausrücklager (7, 8) zugewandte Ende jedes Kolbens (3,4) eine Aufnahme für eine Lagerschale des Ausrücklagers (7, 8) aufweist.

10. Hydraulisches Ausrücksystem nach Anspruch 9, **dadurch gekennzeichnet, dass** die Aufnahme ein dem Gegenstück entsprechendes Profil aufweist.

## Claims

1. A hydraulic disengagement system with a double piston disengaging device (1) for operating a dual clutch of an automated transmission of a vehicle, with pistons (3, 4) placed coaxially with respect to each other in a cylindrical housing (2), which are movable relative to each other to operate the respective diaphragm spring (5, 6) of a clutch of the dual clutch in assigned cylinder chambers (13, 14), **characterized in that** areas of the surfaces of the pistons (3, 4) that face each other are in contact.

2. The hydraulic disengagement system according to Claim 1, **characterized in that** the areas of the surfaces of the pistons (3, 4) that face each other slide on each other with a tight seal around their entire circumference, so that mutual isolation of the respectively assigned cylinder chambers (13, 14) of the pistons (3, 4) results.

3. The hydraulic disengagement system according to Claim 1 or 2, **characterized in that** the two pistons (3, 4) are in the form of ring pistons.

4. The hydraulic disengagement system according to one of the preceding claims, **characterized in that** the pistons (3, 4) contained in the housing (2) are offset from each other in the axial direction.

5. The hydraulic disengagement system according to one of the preceding claims, **characterized in that** at least on the areas of the circumferential surfaces of each piston (3, 4) facing the housing (2) means are provided for sealing off the respective cylinder chamber (13, 14).

6. The hydraulic disengagement system according to Claim 5, **characterized in that** at least one sealing profile (10, 12) is provided as the means of sealing.

7. The hydraulic disengagement system according to one of the preceding claims, **characterized in that** the surfaces of the pistons (3, 4) facing each other are sealed over their entire circumference.

8. The hydraulic disengagement system according to one of the preceding claims, **characterized in that** a clutch release bearing (7, 8) is provided between each diaphragm spring (5, 6) and the corresponding piston (3, 4).

9. The hydraulic disengagement system according to Claim 8, **characterized in that** the end of each piston (3, 4) facing the clutch release bearing (7, 8) has a receptacle for a bearing bushing of the clutch release bearing (7, 8).

10. The hydraulic disengagement system according to Claim 9, **characterized in that** the receptacle has a profile that corresponds to the opposing part.

## Revendications

1. Système de débrayage hydraulique, comprenant un organe de débrayage à piston double (1) pour l'actionnement d'un embrayage double d'une transmission automatisée d'un véhicule, avec des pistons (3, 4), disposés coaxialement l'un à l'autre dans un boîtier (2) en forme de cylindre et qui sont déplaçables l'un par rapport à l'autre dans des chambres cylindriques (13, 14) associées, pour actionner le ressort à diaphragme (5, 6) respectif d'un embrayage appartenant à l'embrayage double, **caractérisé en ce que** des zones, tournées l'une vers l'autre, des surfaces d'enveloppe des pistons (3, 4) sont en contact.

2. Système de débrayage hydraulique selon la revendication 1, **caractérisé en ce que** les zones, tournées l'une vers l'autre, des surfaces d'enveloppe des pistons (3, 4) glissent l'une sur l'autre de façon étanche, sur la totalité de la périphérie, de manière à effectuer une séparation commune des chambres cylindriques (13, 14), chaque fois associées, des pistons (3, 4).

3. Système de débrayage hydraulique, selon la revendication 1 ou 2, **caractérisé en ce que** les deux pistons (3, 4) sont réalisés sous forme de pistons annulaires.

4. Système de débrayage hydraulique selon l'une des revendications précédentes, **caractérisé en ce que** les pistons (3, 4) logés dans le boîtier (2) sont disposés de façon décalée l'un par rapport à l'autre, en direction axiale.

5. Système de débrayage hydraulique selon l'une des revendications précédentes, **caractérisé en ce que**, au moins sur les zones tournées vers le boîtier (2) des surfaces périphériques de chaque piston (3, 4), sont prévus des moyens pour isoler hermétiquement la chambre cylindrique (13, 14) respective.

6. Système de débrayage hydraulique selon la revendication 5, **caractérisé en ce qu'**au moins un profilé d'étanchéité (10, 12) est prévu en tant que moyen d'étanchéité.

7. Système de débrayage hydraulique selon l'une des revendications précédentes, **caractérisé en ce que** les surfaces, tournées l'une vers l'autre, des pistons (3, 4) sont isolées hermétiquement sur la totalité de la périphérie.

8. Système de débrayage hydraulique selon l'une des revendications précédentes, **caractérisé en ce qu'**entre chaque ressort à diaphragme (5, 6) et les pistons (3, 4) associés est prévu un palier de débrayage (7, 8).

9. Système de débrayage hydraulique selon la revendication 8, **caractérisé en ce que** l'extrémité, tournée vers le palier de débrayage (7, 8), de chaque piston (3, 4) présente un logement, pour un coussinet de palier appartenant au palier de débrayage (7, 8).

10. Système de débrayage hydraulique selon la revendication 9, **caractérisé en ce que** le logement présente un profil correspondant à la pièce conjuguée.
